# FASCICULE DE BREVET EUROPEEN

(11) **EP 3 714 741 B1**
(45) Date de publication et mention de la délivrance du brevet: **21.07.2021**
(21) Numéro de dépôt: 20163350.0
(22) Date de dépôt: 16.03.2020
(51) Int. Cl.: A47J 31/20

(54) **APPAREIL DE PRÉPARATION D'UNE BOISSON INFUSÉE ÉQUIPÉ D'UN DISPOSITIF DE DÉPLACEMENT D'UN PANIER À INFUSION AVEC UN SYSTÈME MOTORISÉ MUNI D'UN DÉBRAYAGE**
VORRICHTUNG ZUR VORBEREITUNG EINES INFUSIERTEN GETRÄNKES MIT EINEM GERÄT ZUM BEWEGEN EINES INFUSIONSKORBES MIT EINEM MOTORISIERTEN SYSTEM DAS EINE KUPPLUNG UMFASST
APPARATUS FOR PREPARING AN INFUSED BEVERAGE EQUIPPED WITH A DEVICE FOR MOVING AN INFUSION BASKET WITH A MOTORIZED SYSTEM PROVIDED WITH A CLUTCH

(30) Priorité: 29.03.2019 FR 1903308
(43) Date de publication de la demande: 30.09.2020
(73) Titulaire: SEB S.A., 69130 Ecully (FR)
(72) Inventeur: MANSEAU, Charles, 21000 DIJON (FR); DUMOUX, Philippe, 21120 GEMEAUX (FR)
(74) Mandataire: SEB Développement

(56) Documents cités:
- WO-A1-2008/049163
- CN-A- 103 211 460
- US-A1- 2011 072 979

## Description

### Domaine technique

La présente invention concerne les appareils de préparation d'une boisson infusée qui comportent un panier à infusion pouvant contenir une substance à infuser, notamment du thé, et être déplacé dans de l'eau chaude afin d'infuser ladite substance grâce à un dispositif de déplacement dudit panier à infusion d'une position extraite de l'eau chaude où il s'égoutte à une position immergée dans l'eau chaude où la substance infuse, et inversement.

L'invention porte tout particulièrement sur la conception du dispositif de déplacement du panier à infusion.

### Etat de la technique

Les appareils de préparation d'une boisson infusée sont connus de l'homme du métier. Un tel appareil comprend un corps destiné à recevoir de l'eau. Cette eau peut être préalablement chauffée puis versée dans le corps, selon certains types d'appareil. D'autres types d'appareil peuvent comprendre un dispositif de chauffe de l'eau disposée dans le corps, de l'eau froide étant alors versée dans le corps puis chauffée directement dans celui-ci.

Une boisson infusée se prépare au moyen d'une substance à infuser, par exemple du thé, cette substance étant insérée dans un panier à infusion qui est immergé dans de l'eau chaude pendant une durée adaptée à ladite substance à infuser. Le panier à infusion comporte une paroi filtrante qui laisse pénétrer l'eau chaude dans ledit panier afin que la substance à infuser baigne dans cette eau chaude, ce qui permet l'infusion de ladite substance à infuser, l'eau infusée pouvant passer au travers de la paroi filtrante pour se mélanger au reste de l'eau chaude présente dans le corps de l'appareil.

Certains appareils comportent un panier à infusion qui doit être inséré manuellement par une ouverture supérieure sur le corps de l'appareil afin de l'immerger dans l'eau chaude. Une fois la durée d'infusion atteinte, le panier à infusion doit être extrait de l'appareil par l'ouverture supérieure du corps, ce qui nécessite de maintenir en suspension un certain temps le panier à infusion au-dessus de l'eau infusé au niveau de l'ouverture supérieure avant de l'extraire complètement du corps, afin de laisser le temps à la substance infusée contenue dans le panier à infusion de s'égoutter un minimum. Le panier à infusion doit ensuite être placé dans un récipient, par exemple une coupelle ou une assiette, afin que la substance infusée contenu dans ledit panier à infusion puisse finir de s'égoutter sans s'étaler sur la table ou le plan de cuisine recevant l'appareil. Pour éviter cette manipulation du panier à infusion durant l'égouttage de la substance infusée, ainsi que l'utilisation d'un récipient additionnel recevant ledit panier à infusion après cette égouttage, certains appareils comportent un dispositif de déplacement du panier à infusion qui permet de maintenir ledit panier à infusion et de le déplacer entre deux positions, à savoir une position basse d'infusion dans laquelle le panier à infusion est immergé dans l'eau chaude et une position haute d'égouttage dans laquelle le panier à infusion est positionné au-dessus du niveau d'eau infusée. De tels appareils sont notamment illustrés dans les demandes de brevet ou brevets publiés sous les numéros WO2008/049163A1, US5609092A, US6915733B1, WO2008137133A1 et EP3076830B1.

Selon le brevet américain US5609092A, le dispositif de déplacement comporte un lien de transmission flexible qui comprend une première extrémité reliée au panier à infusion logé dans le corps et une deuxième extrémité agencée sur une poignée fixée audit corps, ladite deuxième extrémité étant assujettie à un organe de manœuvre accessible depuis l'extérieur de la poignée et déplaçable manuellement en hauteur le long de celle-ci. Le déplacement de l'organe de manœuvre vers le haut de la poignée permet à celui-ci de pousser sur la deuxième extrémité du lien, ce qui permet de descendre le panier à infusion pour le plonger dans la position basse d'infusion. Inversement, le déplacement de l'organe de manœuvre vers le bas de la poignée permet à celui-ci de tirer la deuxième extrémité du lien, ce qui permet de monter le panier à infusion pour l'extraire de l'eau infusée dans la position haute d'égouttage.

Selon le brevet américain US6915733B1, le dispositif de déplacement comporte un élément de transmission rigide en forme de U inversé qui comprend une première extrémité reliée au panier à infusion et une deuxième extrémité agencée à l'extérieur du corps et assujettie à un piston qui peut être actionné en montée et descente au moyen de valves, ledit actionnement du piston permettant de déplacer le panier à infusion entre la position basse d'infusion et la position haute d'égouttage dans le corps, et réciproquement, par l'intermédiaire dudit élément de transmission rigide en forme de U inversé.

Selon la demande internationale de brevet WO2008137133A1, l'appareil comprend un corps muni d'une poignée et un couvercle permettant la fermeture d'une ouverture supérieure sur le corps. Ce couvercle comporte un logement interne permettant la réception du panier à infusion configuré à cet effet, ce logement interne communiquant avec l'ouverture supérieure du corps en position fermée du couvercle. Le dispositif de déplacement comporte un câble qui passe dans la poignée et dans le couvercle, le câble comprenant une première extrémité placée dans le couvercle et reliée au panier à infusion et une deuxième extrémité placée dans la poignée et reliée à un système motorisé d'entraînement logé dans la poignée. Ce système motorisé d'entraînement comporte un moteur, une vis entraîné en rotation par le moteur et s'étendant dans le sens de la hauteur dans la poignée et un écrou monté sur la vis d'entraînement et relié à la deuxième extrémité du câble, la rotation de la vis dans un sens et dans l'autre permettant de déplacer l'écrou le long de la vis d'entraînement, de haut en bas et inversement. Le déplacement de l'écrou vers le haut permet de descendre par gravité le panier à infusion dans le corps, le panier à infusion se déplaçant ainsi dans la position basse d'infusion. Inversement, le déplacement de l'écrou vers le bas permet à celui-ci de tirer le câble et ainsi le panier à infusion pour l'extraire de l'eau infusée et le repositionner dans le logement interne du couvercle, en position haute d'égouttage.

Selon le brevet européen EP3076830B1 l'appareil comprend un corps muni d'une poignée et un couvercle permettant la fermeture d'une ouverture supérieure sur le corps. Ce couvercle permet le maintien du panier à infusion au niveau de l'ouverture supérieure du corps, en position fermée du couvercle. Le dispositif de déplacement comporte un câble qui est logé dans le couvercle, le câble comprenant une première extrémité reliée au panier à infusion et une deuxième extrémité reliée à un système motorisé d'entraînement logé dans le couvercle. Ce système motorisé d'entraînement comporte un arbre entraîné en rotation par un moteur et relié à la deuxième extrémité du câble, la rotation de l'arbre dans un sens et dans l'autre permettant d'enrouler le câble autour de l'arbre et inversement de le dérouler. Le déroulement du câble permet de descendre par gravité le panier à infusion dans le corps, le panier à infusion se déplaçant ainsi dans la position basse d'infusion. Inversement, l'enroulement du câble permet de tirer le panier à infusion pour l'extraire de l'eau infusée dans la position haute d'égouttage selon laquelle ledit panier à infusion vient en position d'arrêt sur le couvercle.

Les mises en oeuvre décrites dans les titres US6915733B1, WO2008137133A1 et EP3076830B1 permettent une commande électronique de la montée et de la descente du panier à infusion dans le corps de l'appareil pour le déplacer de la position haute d'égouttage vers la position basse d'infusion et réciproquement. Cela présente pour avantage de pouvoir gérer précisément le temps d'infusion, sans risque de laisser trop longtemps le panier à infusion plongé dans l'eau chaude ou, inversement, de retirer trop rapidement le panier à infusion de l'eau chaude. Ces mises en oeuvre nécessitent toutefois de maîtriser précisément l'arrêt des divers actionneurs (moteur, valve...) lorsque le panier à infusion atteint la position haute d'égouttage et la position basse d'infusion pour ne pas dégrader l'appareil. En particulier dans le cas de l'appareil décrit dans WO2008137133A1, le système motorisé nécessite la présence de capteurs de fin de course pour permettre l'arrêt du moteur et de la rotation de la vis lorsque le panier à infusion atteint la position haute d'égouttage ou la position basse d'infusion, afin d'éviter un blocage de l'écrou lorsque celui-ci atteint les positions extrêmes de la vis.

### Exposé de l'invention

L'invention pallie cet inconvénient précité et met en œuvre, à cet effet, un appareil de préparation de boissons infusées selon la revendication 1.

Ainsi, le débrayage de l'écrou lorsqu'il atteint l'une ou l'autre des deux positions extrêmes sur la vis permet de stopper son déplacement malgré la rotation de cette vis, ce qui évite la détérioration du système motorisé tout en maîtrisant précisément l'arrêt du panier à infusion en position haute d'égouttage et en position basse d'infusion.

Selon l'appareil objet de l'invention, la vis comporte au moins une portion cylindrique de diamètre inférieur au diamètre du taraudage de l'écrou, la portion cylindrique faisant partie du dispositif de débrayage.

De préférence, deux portions cylindriques sont présentes sur la vis, au niveau de ses deux portions d'extrémité.

Selon l'appareil objet de l'invention, le système motorisé comporte au moins un ressort destiné à repousser le taraudage de l'écrou vers le filet de la vis lorsque l'écrou est dans la première position extrême ou dans la deuxième position extrême. L'effort exercé par l'au moins un ressort sur l'écrou permet de réembrayer ledit écrou sur la vis lorsque le moteur est actionné en sens inverse, afin d'amorcer le déplacement du panier à infusion vers la position inverse à celle dans laquelle il se trouve.

Selon cette réalisation de l'appareil, la vis est guidée en rotation par deux paliers d'extrémité. En outre, l'au moins un ressort est agencé autour de l'au moins une portion cylindrique précitée de la vis et il est en appui sur un palier d'extrémité.

Selon l'appareil objet de l'invention, le dispositif de déplacement du panier à infusion comporte un élément de transmission flexible qui passe par une ouverture supérieure du corps. Cet élément de transmission flexible comprend une première extrémité reliée au panier à infusion et une deuxième extrémité entrainée par le système motorisé. En outre, le dispositif de déplacement comporte un ressort de rappel du panier à infusion en position basse d'infusion pour mettre en tension l'élément de transmission flexible et pour ainsi repousser le taraudage de l'écrou vers le filet de la vis lorsque l'écrou est dans la seconde position extrême. Ainsi, ce ressort de rappel sur le dispositif de déplacement permet non seulement de forcer la descente du panier à infusion dans le fond du corps en maintenant tendu en permanence l'élément de transmission flexible, mais aussi de forcer l'écrou à réembrayer sur la vis afin de réaliser ladite descente du panier à infusion dans le corps.

De préférence, cet élément de transmission flexible est du type ruban réalisé en une matière plastique et présente une section rectangulaire aplatie. D'autres éléments de transmission flexibles peuvent être envisagés, par exemple un câble. Au sens de l'invention, on entend par « élément de transmission flexible » le fait que l'élément de transmission est souple pour pouvoir être plié et changer de trajectoire, mais non élastique de sorte à ne pas se déformer sous l'effet de la tension exercée sous l'action du système motorisé d'entraînement et du ressort de rappel du panier à infusion en position basse d'infusion.

De préférence, l'élément de transmission flexible est réalisé en une matière plastique, d'autres matières étant envisageables.

Selon une réalisation de l'appareil, la première extrémité de l'élément de transmission flexible est attachée à un chariot qui coopère avec au moins une colonne de guidage, le panier à infusion étant agencé de manière démontable sur le chariot.

Selon une réalisation de l'appareil, le panier à infusion comporte des aimants internes qui coopèrent avec des aimants externes entrainés par l'écrou pour faire déplacer le panier à infusion de la position basse d'infusion à la position haute d'égouttage et réciproquement, le long d'une paroi du corps. Cela permet d'assurer un montage amovible du panier à infusion dans le corps de l'appareil. D'autres systèmes d'assemblage amovible du panier à infusion dans le corps sont envisageables, ceux-ci pouvant être mis en œuvre par des moyens magnétiques ou par des moyens mécaniques. Le montage amovible du panier à infusion dans le corps facilite le retrait de la substance infusée, le nettoyage du panier à infusion et l'insertion d'une substance à infuser dans le panier à infusion.

Selon l'appareil objet de l'invention, le corps comporte une paroi munie d'une poignée. En outre, le système motorisé est agencé dans la poignée. Cela évite d'augmenter l'encombrement du corps de l'appareil.

Selon l'appareil objet de l'invention, le système motorisé d'entrainement du panier à infusion met un temps T1 pour faire passer l'écrou de la première position extrême à la deuxième position extrême et réciproquement. En outre, l'appareil comprend un circuit de commande qui alimente le moteur pendant un temps T2 supérieur au temps T1 pour faire passer le panier à infusion de la position basse d'infusion à la position haute d'égouttage et réciproquement. Cela permet de garantir que les positions extrêmes de l'écrou sur la vis sont atteintes avant l'arrêt du moteur entraînant en rotation ladite vis.

De préférence, lorsque le panier à infusion est dans la position basse d'infusion, le circuit de commande alimente le moteur pendant un temps T3 inférieur au temps T1 puis alimente le moteur en sens inverse pendant un temps T4 supérieur au temps T3, de sorte à agiter le panier à infusion pendant le cycle d'infusion.

Selon l'invention, l'appareil comporte des moyens de chauffe de l'eau contenue dans le corps.

### Brève description des figures

Les caractéristiques et avantages de l'invention apparaîtront à la lecture de la description suivante s'appuyant sur des figures, parmi lesquelles :
[Fig. 1] La figure 1 est une vue d'ensemble d'un appareil de préparation de boissons infusées selon l'invention ;
[Fig. 2] La figure 2 est une vue en coupe montrant le panier à infusion en position basse d'infusion dans le corps de l'appareil ;
[Fig. 3] La figure 3 est une vue en coupe montrant le panier à infusion en position haute d'égouttage dans le corps de l'appareil ;
[Fig. 4] La figure 4 est une vue en coupe montrant notamment le système mécanique de rappel et le système motorisé d'entraînement, avec le panier à infusion en position basse d'infusion ;
[Fig. 5] La figure 5 est une vue en coupe montrant notamment le système mécanique de rappel et le système motorisé d'entraînement, avec le panier à infusion en position haute d'égouttage ;
[Fig. 6] La figure 6 montre en coupe partielle la colonne de guidage du chariot recevant le panier à infusion et la pièce de guidage de l'élément de transmission flexible ;
[Fig. 7] La figure 7 montre le système motorisé d'entraînement dans la position basse d'infusion du panier à infusion ;
[Fig. 8] La figure 8 montre le système motorisé d'entraînement dans la position haute d'égouttage du panier à infusion ;
[Fig. 9] La figure 9 montre plus en détail l'élément de transmission flexible agencé entre l'écrou du système motorisé d'entraînement et le chariot recevant le panier à infusion ;
[Fig. 10] La figure 10 montre le chariot destiné à recevoir de manière amovible le panier à infusion ;
[Fig. 11] La figure 11 montre le panier à infusion destiné à être monté de manière amovible sur le chariot de la figure 10 ;
[Fig. 12] La figure 12 montre notamment la vis d'entraînement du système motorisé d'entraînement ;
[Fig. 13] La figure 13 schématise un dispositif d'assemblage amovible du panier à infusion à l'intérieur du corps, du type magnétique.

### Description détaillée de l'invention

Dans la suite de la description, le terme appareil est utilisé pour désigner l'appareil de préparation de boissons infusées, le terme lien est utilisé pour désigner l'élément de transmission flexible et le terme panier est utilisé pour désigner le panier à infusion. En outre, les mêmes références sont utilisées pour désigner les caractéristiques identiques ou équivalentes sur l'appareil, sauf indication dans le texte.

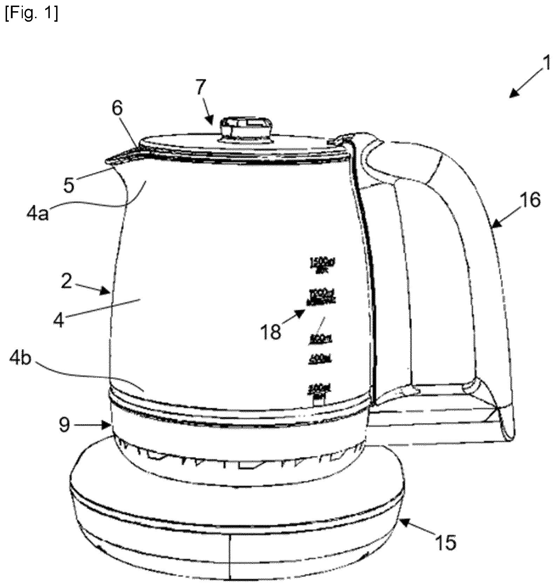

En regard des figures 1 à 3, l'appareil 1 se présente comme une bouilloire électrique, avec un corps 2 définissant une chambre 3 qui permet de contenir de l'eau. Le corps 2 comprend une paroi périphérique 4 qui comporte dans sa partie supérieure 4a un bec verseur 5. Le corps 2 comprend une ouverture supérieure 6 qui communique avec la chambre 3. L'appareil 1 comprend un couvercle 7 qui permet de fermer l'ouverture supérieure 6 du corps 2 ; selon deux variantes possibles de l'appareil 1, ce couvercle 7 peut être indépendant du corps 2 de sorte à pouvoir le dégager complètement ou, au contraire, articulé vis-à-vis dudit corps 2 de sorte à le conserver à demeure sur celui-ci et permettre uniquement l'accès à l'ouverture supérieure dudit corps 2. L'appareil 1 comprend une plaque chauffante 8 qui constitue un fond de la chambre 3, la plaque chauffante 8 étant montée de manière étanche vis-à-vis du corps 2 grâce à un boitier 9 monté sur la partie inférieure 4b de la paroi périphérique 4 dudit corps 2. Ce boîtier 9 permet notamment d'y loger une résistance chauffante 10 fixée sous la plaque chauffante 8, un circuit de commande 11 et un capteur de température 12 fixé également sous la plaque chauffante 8. Ce boîtier 9 comprend un fond 13 au niveau duquel est agencé un connecteur électrique femelle 14 qui est raccordé au circuit de commande 11 et permet sa connexion électrique à une base 15 qui comprend un connecteur électrique mâle (non illustré) complémentaire audit connecteur électrique femelle 14. Cette base 15 peut être raccordée électriquement à une source électrique externe par le biais d'une prise de courant (non illustrée). L'appareil 1 comprend aussi une poignée 16 qui s'étend le long de la paroi périphérique 4 du corps 2, du côté opposé à celui du bec verseur 5. L'homme du métier pourra s'inspirer des bouilloires électriques existantes pour la mise en œuvre des caractéristiques techniques précitées.

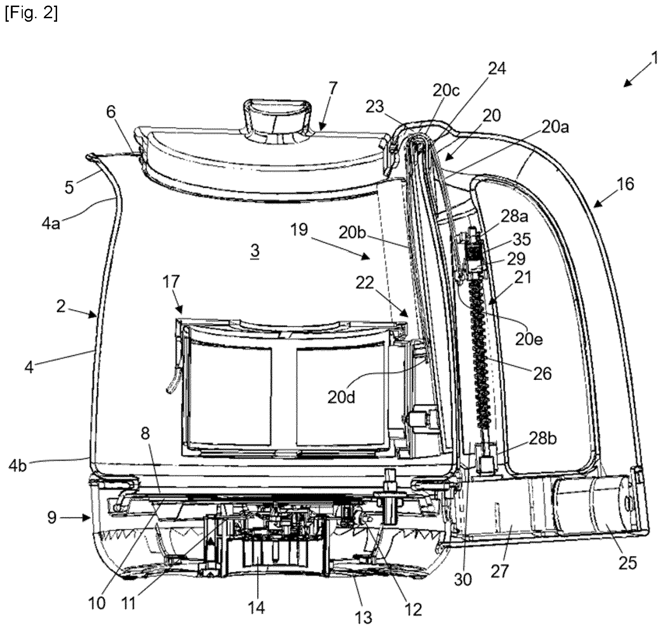

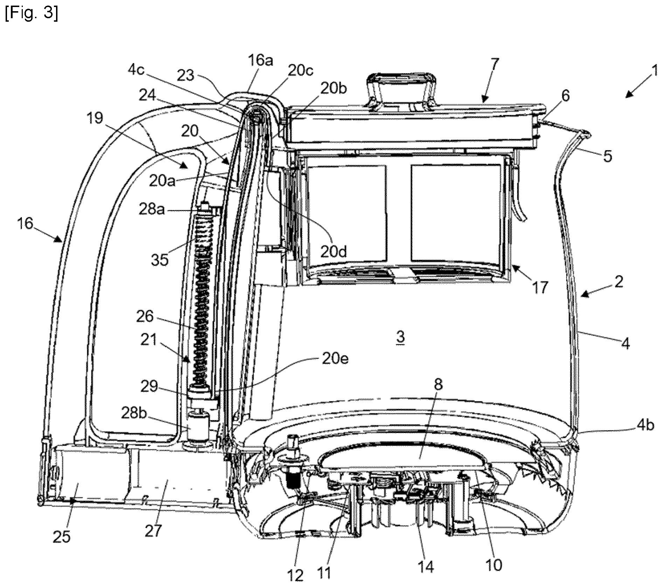

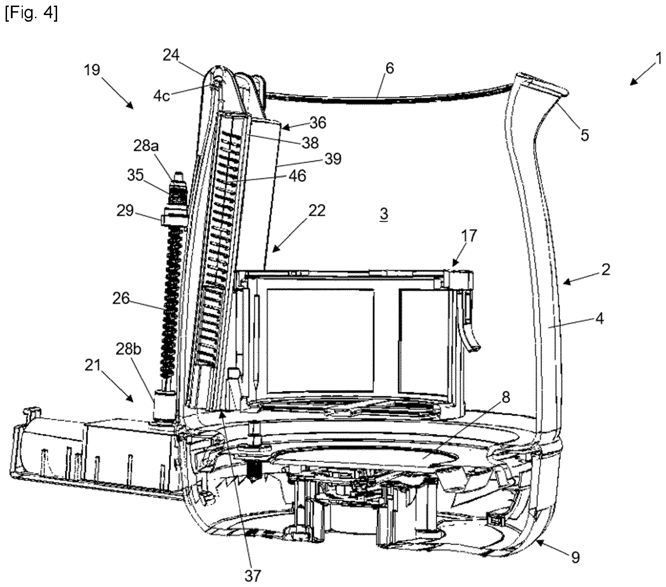

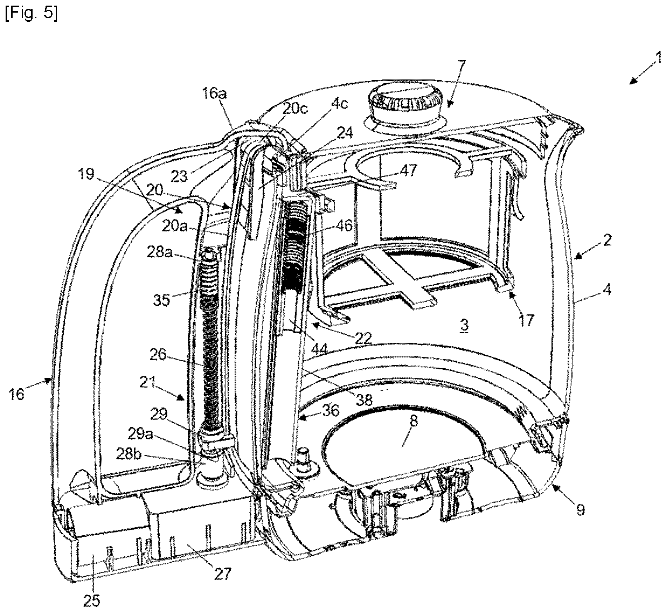

L'appareil 1 comprend un panier 17 qui peut se déplacer à l'intérieur de la chambre 3 du corps 2 entre une position basse d'infusion illustrée en figures 2 et 4, selon laquelle le panier 17 sera plongé dans de l'eau contenue dans la chambre 3 et qui aura été chauffée au préalable par la plaque chauffante 8, et une position haute d'égouttage illustrée en figures 3 et 5, selon laquelle le panier 17 sera disposé au-dessus du niveau de l'eau infusée contenue dans ladite chambre 3.

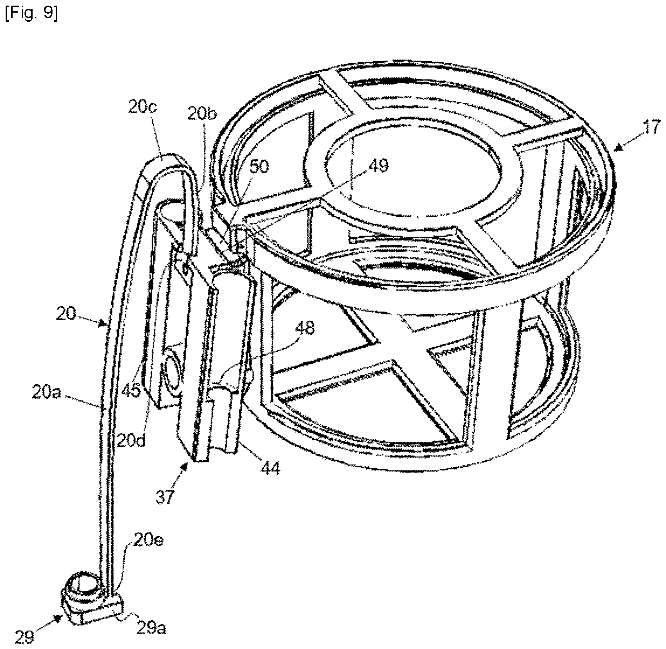

De préférence, la paroi périphérique 4 du corps 2 comportera un système de graduations 18, illustré en figure 1, qui permettra de préconiser une quantité d'eau minimale et maximale à verser dans la chambre 3 pour s'assurer que le panier 17 plonge correctement dans l'eau durant la réalisation de la boisson infusée puis sorte correctement de l'eau infusée pour son égouttage. Les déplacements du panier 17 dans la chambre 3 sont réalisés au moyen d'un dispositif de déplacement 19 qui comporte un lien 20, un système motorisé d'entrainement 21 agissant sur le lien 20 et un système mécanique de rappel 22 agissant sur le panier 17 pour le ramener dans la position basse d'infusion, tel que l'illustrent notamment les figures 2 à 5. En regard notamment des figures 5 et 9, le lien 20 présente la forme d'un ruban ayant une section rectangulaire aplatie et il est de préférence réalisé dans une matière plastique, ce qui lui donne de la souplesse permettant de le plier tout en empêchant son allongement sous l'effet d'un effort de traction exercé dans un sens ou dans l'autre par le système motorisé d'entraînement 21 et par le système mécanique de rappel 22.

En regard des figures 2 et 3, la partie supérieure 16a de la poignée 16 communique avec l'ouverture supérieure 6 du corps 2, grâce à un passage 23 agencé entre la poignée 16 et le corps 2. Ce passage 23 permet de loger une première portion 20a du lien 20 dans la poignée 16 et de loger une seconde portion 20b du lien 20 dans le corps 2, en passant ledit lien 20 au travers dudit passage 23. La souplesse du lien 20 permet de le courber en forme de U inversé, sa portion courbée 20c prenant appui sur une pièce de guidage 24 illustrée plus en détail en figures 4, 5 et 6 qui permet de guider ledit lien 20 durant ses déplacements d'un côté et de l'autre du passage 23 lors des déplacements du panier 17 vers la position basse d'infusion ou la position haute d'égouttage. La pièce de guidage 24 est courbée en forme de U inversé et prend appui sur un bord supérieur 4c de la paroi périphérique 4 attenant à la poignée 16. La matière plastique utilisée pour le lien 20, par exemple du polyamide, réduit les frottements de celui-ci sur la pièce de guidage 24 durant ses déplacements.

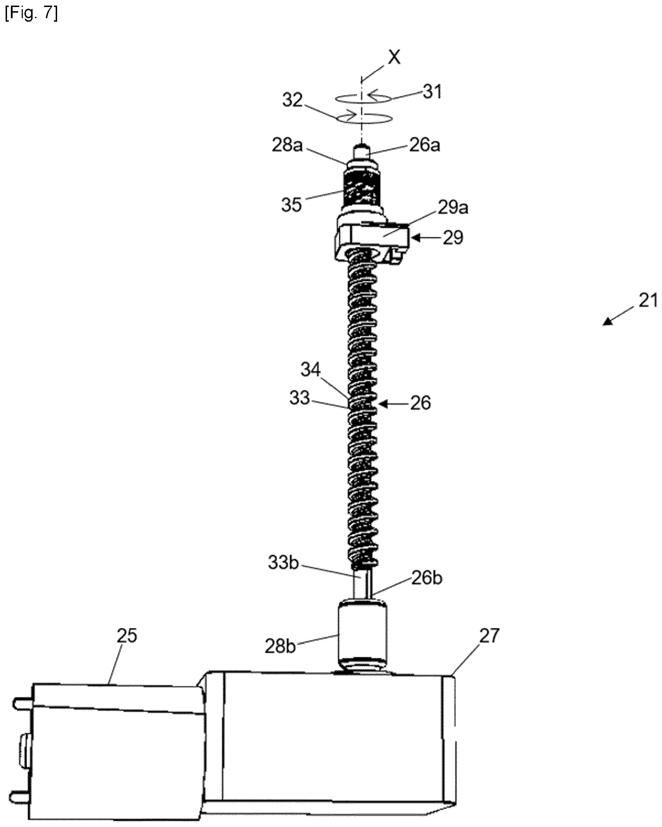

En regard notamment des figures 7 à 9, le système motorisé d'entraînement 21 comprend un moteur 25 qui entraîne une vis 26 par le biais d'un boîtier de transmission 27. Les portions d'extrémité supérieure 26a et inférieure 26b de cette vis 26 sont montées en liaison pivot d'axe X dans la poignée 16 par l'intermédiaire de deux paliers de roulement supérieur 28a et inférieur 28b, ce qui permet la rotation de la vis 26 selon son axe X qui s'étend plus ou moins verticalement le long de la poignée 16. Cette vis 26 reçoit un écrou 29 qui comprend une face latérale plane 29a venant en appui contre une plaque d'arrêt 30 (illustrée figure 2) agencée longitudinalement à l'intérieur de la poignée dans le sens de la vis 26 ; cette plaque d'arrêt 30 bloque la rotation de l'écrou 29 autour de l'axe X de la vis 26, ce qui permet la translation de cet écrou 29 le long de l'axe X sous la rotation de la vis 26. La rotation de la vis 26 dans le sens de la flèche 31 permet la descente de l'écrou 29 dans la poignée 16 jusqu'à ce que ledit écrou 29 atteigne la position basse sur ladite vis 26, telle qu'illustrée en figures 3, 5 et 8. Inversement, la rotation de la vis 26 dans le sens de la flèche 32 permet la montée de l'écrou 29 dans la poignée 16 jusqu'à ce que ledit écrou 29 atteigne la position haute sur ladite vis 26, telle qu'illustrée en figures 2, 4 et 7. La position haute correspond à une première position extrême de l'écrou 29 sur la vis 26 et la position basse correspond à une seconde position extrême de l'écrou 29 sur la vis 26.

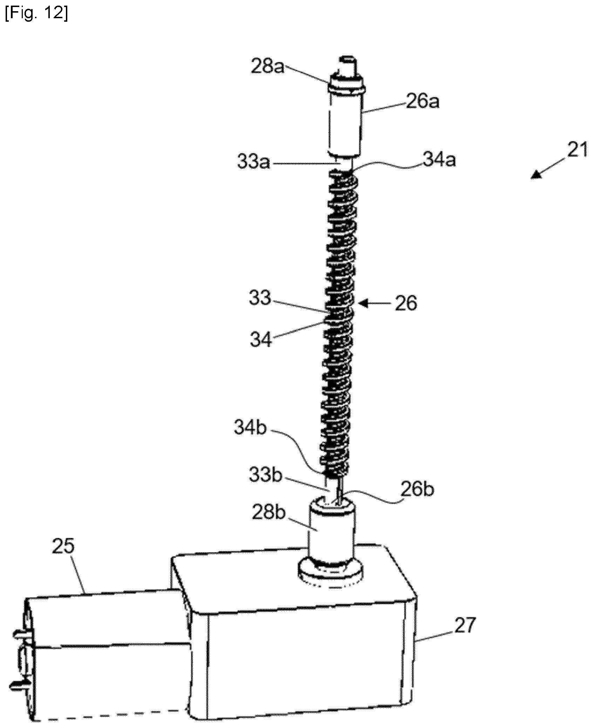

En regard de la figure 12, la vis 26 comprend une tige filetée 33 qui comporte une portion d'extrémité supérieure 33a, une portion d'extrémité inférieure 33b et un filet 34 qui s'étend entre lesdites portions d'extrémité supérieure 33a et inférieure 33b. En d'autres termes, les extrémités supérieure 34a et inférieure 34b du filet 34 s'arrêtent au niveau des portions d'extrémité supérieure 33a et inférieure 33b de la tige filetée 33. L'écrou 29 comprend un taraudage (non illustré) qui est embrayé (en prise) avec le filet 34 de la tige filetée 33 durant les déplacements dudit écrou 29 le long de la vis 26. Les portions d'extrémité supérieure 33a et inférieure 33b de la tige filetée 33 présentent un diamètre qui est inférieur à celui du filet du taraudage (non illustré) de l'écrou 29, ce qui permet à l'écrou 29 de venir se positionner librement dans ces portions d'extrémité supérieure 33a et inférieure 33b de la tige filetée 33 sans venir en butée contre celles-ci lorsque ledit écrou 29 atteint les extrémités supérieure 34a et inférieure 34b du filet 34. Lorsque l'écrou 29 atteint la position haute sur ladite vis 26 telle qu'illustrée en figures 2, 4 et 7, ledit écrou 29 atteint la portion d'extrémité supérieure 33a de la tige filetée 33, position selon laquelle le taraudage de l'écrou 29 débraye de (n'est plus en prise avec) l'extrémité supérieure 34a du filet 34 de la tige filetée 33, ce qui arrête le déplacement vers le haut de l'écrou 29, malgré la rotation de la vis 26 dans le sens de la flèche 32. De même, lorsque l'écrou 29 atteint la position basse sur ladite vis 26 telle qu'illustrée en figures 3, 5 et 8, ledit écrou 29 atteint la portion d'extrémité inférieure 33b de la tige filetée 33, position selon laquelle le taraudage de l'écrou 29 débraye de (n'est plus en prise avec) l'extrémité inférieure 34b du filet 34 de la tige filetée 33, ce qui arrête le déplacement vers le bas de l'écrou 29, malgré la rotation de la vis 26 dans le sens de la flèche 31.

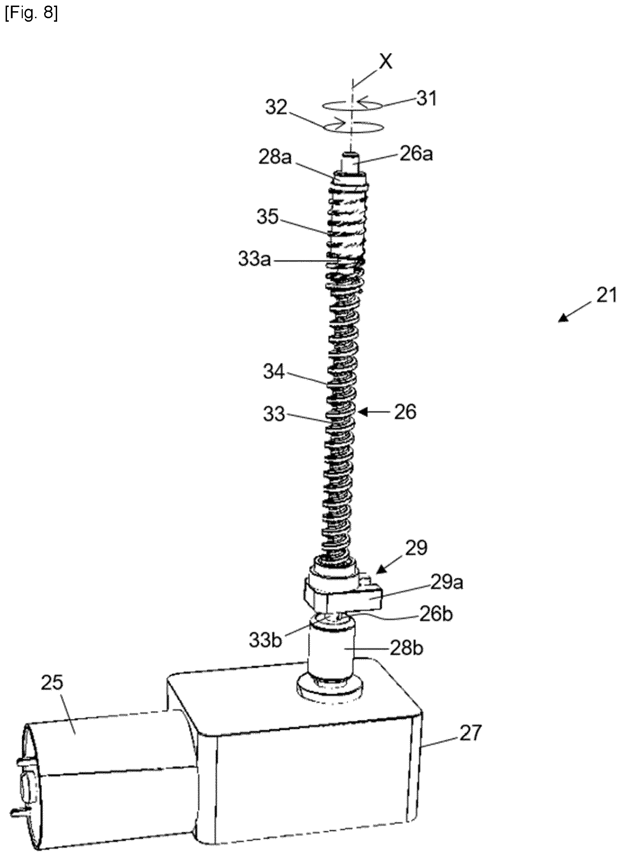

En regard notamment des figures 7, 8 et 12, un ressort 35 est monté sur la portion d'extrémité supérieure 26a de la vis 26, au-dessus de l'écrou 29, et prend appui sur le palier de roulement supérieur 28a. Lorsque le ressort 35 est à l'état de repos tel qu'illustré en figure 8, celui-ci recouvre la portion d'extrémité supérieure 33a de la tige filetée 33. Lorsque l'écrou 29 est débrayé de la tige filetée 33 et disposé dans sa portion d'extrémité supérieure 33a, dans la position haute (figure 7), le ressort 35 est compressé, et exerce de ce fait une poussée vers le bas sur l'écrou 29, ce qui force le taraudage dudit écrou 29 à réembrayer avec l'extrémité supérieure 34a du filet 34 de la tige filetée 33 lors d'une inversion du sens de rotation de la vis 26 qui se met alors à tourner dans le sens de la flèche 31, permettant ainsi à l'écrou 29 de redescendre. Inversement, lorsque l'écrou 29 est débrayé de la tige filetée 33 et disposé dans sa portion d'extrémité inférieure 33b, dans la position basse (figure 8), le système mécanique de rappel 22 (détaillé ci-après) agit sur le panier 17 pour forcer son retour en position basse d'infusion, ce qui permet au lien 20 d'exercer une traction vers le haut sur l'écrou 29 et, ainsi, de forcer le taraudage dudit écrou 29 à réembrayer avec l'extrémité inférieure 34b du filet 34 de la tige filetée 33 lors d'une inversion du sens de rotation de la vis 26 qui se met alors à tourner dans le sens de la flèche 32, permettant ainsi à l'écrou 29 de remonter.

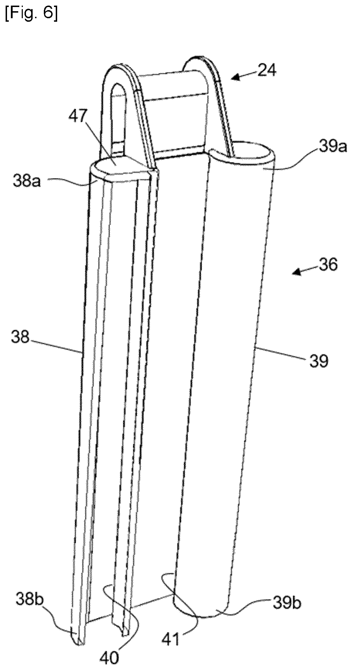

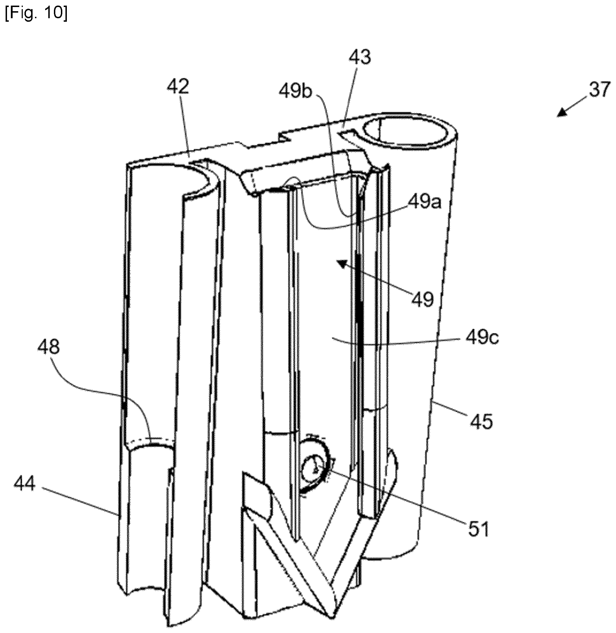

En regard des figures 4 à 6 et 9 à 10, le système mécanique de rappel 22 comprend une colonne de guidage 36 (illustrée plus en détail en figure 6) qui s'étend longitudinalement sur la paroi périphérique 4 du corps 2 à l'intérieur de la chambre 3, à proximité de la vis 26 logée dans la poignée 16. Cette colonne de guidage 36 reçoit en liaison glissière un chariot 37 (illustré plus en détail en figures 9 et 10) qui peut se déplacer selon une trajectoire définie par la longueur de ladite colonne de guidage 36. La colonne de guidage 36 comporte deux tubes 38, 39 munis chacun d'une fente 40, 41 longitudinale, ces fentes 40, 41 permettant le passage de deux parties plates 42, 43 agencées sur le chariot 37, lesdits tubes 38, 39 réceptionnant deux parties tubulaires 44, 45 du chariot 37. Les tubes 38, 39 sont fermés à leurs extrémités supérieures 38a, 39a et ils sont ouverts à leurs extrémités inférieures 38b, 39b pour permettre l'introduction du chariot 37 dans la colonne de guidage 36. Un ressort 46 (illustré en figures 4 et 5) est logé dans le tube 38 de la colonne de guidage 36 et la partie tubulaire 44 du chariot 37, ledit ressort 46 étant monté en compression entre un fond 47 sur l'extrémité supérieure 38a dudit tube 38 et un épaulement interne 48 sur la partie tubulaire 44 du chariot 37, ce qui tend à pousser vers le bas le chariot 37 pour assurer le rappel du panier 17 vers la position basse d'infusion illustrée en figure 4. Un tel ressort 46 peut être mis en œuvre entre le second tube 39 de la colonne de guidage 36 et la seconde partie tubulaire 45 du chariot 37, afin d'équilibrer les efforts et d'assurer une translation convenable du chariot 37 le long de la colonne de guidage 36.

En regard des figures 2 à 5 et 9, la première extrémité 20d du lien 20 est disposée dans la chambre 3 du corps 2 et reliée au chariot 37 du système mécanique de rappel 22 et la seconde extrémité 20e du lien 20 est disposée dans la poignée 16 et reliée à l'écrou 29 du système motorisé d'entraînement 21. Lorsque le panier 17 est en position haute d'égouttage, illustrée en figure 5, l'écrou 29 est débrayé sur la portion d'extrémité inférieure 33b de la tige filetée 33 de la vis 26 tel qu'expliqué précédemment et le ressort 46 dans la colonne de guidage 36 est en compression maximale, celui-ci tendant à pousser le chariot 37 vers le bas. Cette poussée vers le bas exercée sur le chariot 37 permet au lien 20 de tirer vers le haut l'écrou 29, ce qui permet audit écrou 29 de réembrayer avec la tige filetée 33 de la vis 26 lorsque celle-ci commence à tourner dans le sens de la flèche 32. Une fois l'écrou 29 réembrayé, celui-ci se déplace vers le haut sur la vis 26 qui continue à tourner dans le sens de la flèche 32, ce qui permet la remontée de la seconde extrémité 20e du lien 20 et donne du mou audit lien 20, permettant ainsi au ressort 46 de descendre le chariot 37 assujetti au panier 17 jusqu'à atteindre la position basse d'infusion, illustrée en figure 4, selon laquelle l'écrou 29 débraye de la portion d'extrémité supérieure 33a de la tige filetée 33 de la vis 26, tel qu'expliqué précédemment. Tel qu'expliqué précédemment, le ressort 35 sur la vis 26 permet à l'écrou 29 de réembrayer avec la tige filetée 33 de ladite vis 26 lorsque celle-ci commence à tourner en sens inverse dans le sens de la flèche 31. Une fois l'écrou 29 réembrayé, celui-ci se déplace vers le bas sur la vis 26 qui continue à tourner dans le sens de la flèche 31, ce qui permet audit écrou 29 de tirer sur le lien 20 relié au chariot 37 qui remonte alors sur la colonne de guidage 36 jusqu'à ce que le panier 17 arrive en position haute d'égouttage, illustrée en figure 5, selon laquelle l'écrou 29 débraye à nouveau de la portion d'extrémité inférieure 33b de la tige filetée 33.

Le circuit de commande 11 dans le boîtier 9 de l'appareil 1 est programmé pour actionner le moteur 25 pendant une durée T2 supérieure à la durée T1 nécessaire pour déplacer le panier 17 de la position haute d'égouttage à la position basse d'infusion, ou inversement, de manière à garantir une course totale de l'écrou 29 entre les positions basse et haute sur la vis 26 malgré les cas où ledit écrou 29 met un laps de temps à réembrayer sur la vis 26 lors d'un changement du sens de rotation de celle-ci. Ce circuit de commande 11 peut aussi être programmé pour faire tourner le moteur 25 pendant une durée T3, inférieure à la durée T1, afin d'entraîner la rotation de la vis 26 dans le sens de la flèche 31 lorsque l'écrou 29 est en position haute illustrée en figure 8, correspondant à une position basse d'infusion du panier 17, ce qui permet de descendre en partie l'écrou 29 sur la vis d'entraînement 26 et ainsi de remonter partiellement le panier 17 dans la chambre 3 du corps 2 en le conservant dans l'eau chaude, puis pour faire tourner le moteur 25 en sens inverse pendant une durée T4, supérieure à la durée T3, afin d'entraîner la rotation de la vis 26 dans le sens de la flèche 32 permettant de garantir un retour de l'écrou 29 dans ladite position haute en sorte de redescendre le panier 17 dans ladite position basse d'infusion. Cela permet de créer une agitation du panier 17 dans l'eau chaude contenue dans la chambre 3, durant l'infusion.

En regard des figures 9 à 11, le panier 17 est monté de manière amovible sur le chariot 37 de sorte à permettre l'extraction du panier 17 hors du corps 2 de l'appareil 1 afin d'insérer de la substance à infuser dans le panier 17 ou, au contraire, de retirer la substance infusée dudit panier 17 et nettoyer ce dernier. Le chariot 37 comporte une glissière 49 munie de deux rainures longitudinales 49a, 49b et le panier 17 comporte une pièce 50 en forme de T munie de deux parties latérales 50a, 50b qui s'engagent dans lesdites rainures longitudinales 49a, 49b. Le chariot 37 comprend un plot 51 agencé de manière escamotable dans le fond 49c de la glissière 49, le plot 51 étant monté en rappel sur ressort (non illustré) de sorte à revenir dans la position sortie illustrée en figure 10. La pièce 50 comprend un orifice 52 sur sa face plane 50c, laquelle est attenante au fond 49c de la glissière 49 lorsque ladite pièce 50 est engagée dans celle-ci, position illustrée en figure 9 selon laquelle le plot 51 est encliqueté dans l'orifice 52. Le plot 51 s'escamote dans le fond 49c de la glissière 49 lorsqu'un effort suffisant est exercé sur le panier 17 en tirant dessus pour son retrait du chariot 37 ou en poussant dessus pour sa mise en place sur le chariot 37.

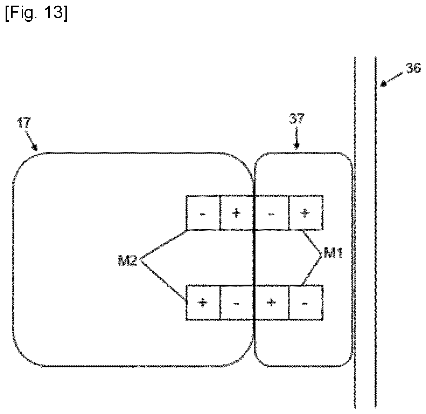

D'autres dispositifs d'assemblage peuvent être envisagés pour monter le panier 17 de manière amovible sur le chariot 37. A titre d'exemple, illustré en figure 13, le chariot 37 peut comporter une première paire d'aimants M1 et le panier 17 peut comporter une seconde paire d'aimants M2, lesdites paires d'aimants M1, M2 ayant des polarités inversées de sorte à assurer une attraction magnétique entre le chariot 37 et le panier 17. La polarité des deux aimants sur chaque paire d'aimants M1, M2 pourra aussi être inversée comme l'illustre cette figure 13 afin de permettre un assemblage du panier 17 sur le chariot 37 selon une position unique. D'autres moyens d'attraction magnétique sont envisageables entre le chariot 37 et le panier 17.

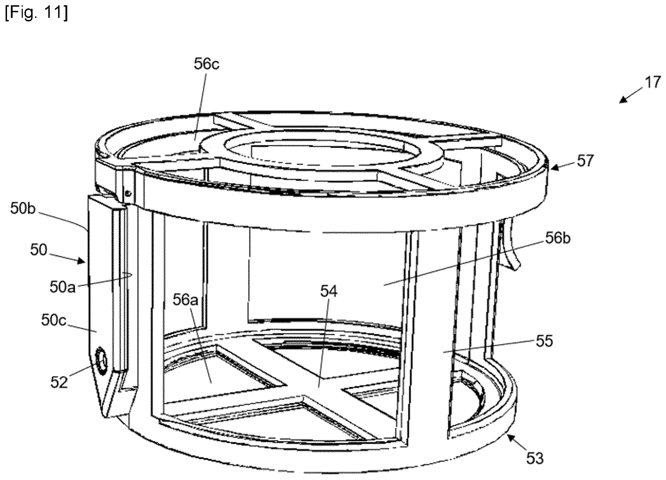

Tel qu'illustré en figure 11, le panier 17 comprend un contenant 53 muni d'un fond 54 et d'un contour 55 sur lesquels sont définies des fenêtres 56a, 56b. Le panier 17 comprend aussi un couvercle 57 fermant le contenant 53, sur lequel sont également définies des fenêtres 56c. Bien entendu, le contenant 53 et le couvercle 57 sont revêtus d'une paroi filtrante (non illustrée) permettant de contenir la substance à infuser ou infusée dans le panier 17 et de laisser passer l'eau chaude infusée ou non durant ladite infusion et durant l'égouttage du panier 17.

Des variantes de l'appareil 1 sont envisageables dans le cadre de l'invention. A titre d'exemple, le lien 20 pourrait être de conception différente, par exemple un câble, celui-ci devant toutefois être souple et non élastique. L'appareil 1 peut comporter aussi d'autres conceptions du système mécanique de rappel 22 du panier 17 dans la position basse d'infusion ; par exemple, on pourrait prévoir un système mécanique de rappel 22 qui tire le panier 17 vers la position basse d'infusion plutôt que de pousser ledit panier 17 comme cela est le cas avec le mode de réalisation décrit ci-avant.

Des variantes de l'appareil 1 sont également envisageables sans le système mécanique de rappel 22, dans quel cas un ressort - agencé de manière similaire au ressort 35 - sera prévu dans la portion d'extrémité inférieure 26b de la vis 26 de sorte à réembrayer l'écrou 29 lorsqu'il se situe dans la portion d'extrémité inférieure 33b de la tige filetée 33 et que la vis 26 se met à tourner en sens inverse, dans le sens de la flèche 32. Dans l'exemple décrit ci-avant, la vis 26 est positionnée plus ou moins verticalement ; celle-ci pourrait toutefois être inclinée, selon la forme de la poignée 16.

## Revendications

1. Appareil (1) de préparation de boissons infusées comportant un corps (2) destiné à recevoir de l'eau, un panier à infusion (17) et un dispositif de déplacement (19) du panier à infusion dans le corps entre une position basse d'infusion dans laquelle ledit panier à infusion est immergé dans l'eau et une position haute d'égouttage dans laquelle il est agencé au-dessus du niveau d'eau, le dispositif de déplacement (19) comportant un système motorisé (21) qui comprend une vis (26) entrainée en rotation par un moteur (25) et un écrou (29) monté sur la vis et relié au panier à infusion (17), ledit écrou (29) étant mobile le long de la vis entre une première position extrême dans laquelle le panier à infusion (17) est dans la position basse d'infusion et une deuxième position extrême dans laquelle le panier à infusion (17) est dans la position haute d'égouttage, **caractérisé en ce que** le système motorisé (21) comporte un dispositif de débrayage du taraudage de l'écrou (29) par rapport au filet (34) de la vis (26) lorsque l'écrou (29) atteint la première position extrême ou la deuxième position extrême.

2. Appareil (1) selon la revendication 1, dans lequel la vis (26) comporte au moins une portion cylindrique (33a, 33b) de diamètre inférieur au diamètre du taraudage de l'écrou (29), la portion cylindrique (33a, 33b) faisant partie du dispositif de débrayage.

3. Appareil (1) selon la revendication 2, dans lequel le système motorisé (21) comporte au moins un ressort (35) destiné à repousser le taraudage de l'écrou (29) vers le filet (34) de la vis (26) lorsque l'écrou (29) est dans la première position extrême ou dans la deuxième position extrême.

4. Appareil (1) selon la revendication 3, dans lequel la vis (26) est guidée en rotation par deux paliers d'extrémité (28a, 28b), l'au moins un ressort (35) étant agencé autour de l'au moins une portion cylindrique (33a) et en appui sur un palier d'extrémité (28a).

5. Appareil (1) selon la revendication 3, dans lequel le dispositif de déplacement (19) du panier à infusion (17) comporte un élément de transmission flexible (20) qui passe par une ouverture supérieure (6) du corps (2), ledit élément de transmission flexible (20) comprenant une première extrémité (20d) reliée au panier à infusion (17) et une deuxième extrémité (20e) entrainée par le système motorisé (21), ledit dispositif de déplacement (19) comportant en outre un ressort (46) de rappel du panier à infusion (17) en position basse d'infusion pour mettre en tension l'élément de transmission flexible (20) et pour ainsi repousser le taraudage de l'écrou (29) vers le filet (34) de la vis (26) lorsque l'écrou (29) est dans la seconde position extrême.

6. Appareil (1) selon la revendication 5, dans lequel l'élément de transmission flexible (20) est du type ruban réalisé en une matière plastique et présente une section rectangulaire aplatie.

7. Appareil (1) selon la revendication 5 ou 6, dans lequel la première extrémité (20d) de l'élément de transmission flexible (20) est attachée à un chariot (37) qui coopère avec au moins une colonne de guidage (36), le panier à infusion (17) étant agencé de manière démontable sur le chariot (37).

8. Appareil (1) selon l'une quelconque des revendications 1 à 7, dans lequel le panier à infusion (17) comporte des aimants internes qui coopèrent avec des aimants externes entrainés par l'écrou (29) pour faire déplacer le panier à infusion (17) de la position basse d'infusion à la position haute d'égouttage et réciproquement, le long d'une paroi périphérique (4) du corps (2).

9. Appareil (1) selon l'une quelconque des revendications 1 à 8, dans lequel le corps (2) comporte une paroi périphérique (4) munie d'une poignée (16) et le système motorisé (21) est agencé dans ladite poignée (16).

10. Appareil (1) selon l'une quelconque des revendications 1 à 9, dans lequel le système motorisé (21) d'entrainement du panier à infusion (17) met un temps T1 pour faire passer l'écrou (29) de la première position extrême à la deuxième position extrême et réciproquement, ledit appareil comportant un circuit de commande (11) qui alimente le moteur (25) pendant un temps T2 supérieur au temps T1 pour faire passer le panier à infusion (17) de la position basse d'infusion à la position haute d'égouttage et réciproquement.

11. Appareil (1) selon la revendication 10, dans lequel le circuit de commande (11) alimente le moteur (25) pendant un temps T3 inférieur au temps T1 puis alimente le moteur (25) en sens inverse pendant un temps T4 supérieur au temps T3, lorsque le panier à infusion (17) est dans la position basse d'infusion, pour agiter le panier à infusion (17) pendant le cycle d'infusion.

12. Appareil (1) selon l'une quelconque des revendications 1 à 11, lequel comporte des moyens de chauffe (8, 10) de l'eau contenue dans le corps (2).

## Patentansprüche

1. Einrichtung (1) zur Zubereitung von Infusionsgetränken, die einen Körper (2), der dazu bestimmt ist, Wasser, einen Infusionskorb (17) und eine Verschiebevorrichtung (19) des Infusionskorbes in dem Körper zwischen einer unteren Infusionsposition, in der der Infusionskorb in das Wasser eingetaucht ist, und einer oberen Abtropfposition, in der er oberhalb des Wasserpegels angeordnet ist, umfasst, wobei die Verschiebevorrichtung (19) ein motorisiertes System (21) umfasst, das eine Schnecke (26) umfasst, die durch einen Motor (25) und eine Mutter (29), die auf der Schnecke angebracht und mit dem Infusionskorb (17) verbunden ist, angetrieben wird, wobei die Mutter (29) entlang der Schnecke zwischen einer ersten Endposition, in der der Infusionskorb (17) in der unteren Infusionsposition ist, und einer zweiten Endposition beweglich ist, in der der Infusionskorb (17) in der oberen Abtropfposition ist, **dadurch gekennzeichnet, dass** das motorisierte System (21) eine Auskoppelvorrichtung des Innengewindes der Mutter (29) in Bezug auf das Außengewinde (34) der Schnecke (26) umfasst, wenn die Mutter (29) die erste Endposition oder die zweite Endposition erreicht.

2. Einrichtung (1) nach Anspruch 1, wobei die Schnecke (26) mindestens einen zylindrischen Abschnitt (33a, 33b) mit einem kleineren Durchmesser als ein Innendurchmesser der Mutter (29) umfasst, wobei der zylindrische Abschnitt (33a, 33b) Teil der Auskoppelvorrichtung ist.

3. Einrichtung (1) nach Anspruch 2, wobei das motorisierte System (21) mindestens eine Feder (35) umfasst, die dazu bestimmt ist, das Innengewinde der Mutter (29) zum Außengewinde (34) der Schnecke (26) zu drücken, wenn die Mutter (29) in der ersten Endposition oder in der zweiten Endposition ist.

4. Einrichtung (1) nach Anspruch 3, wobei die Schnecke (26) durch zwei Endlager (28a, 28b) drehgeführt wird, wobei die mindestens eine Feder (35) um den mindestens einen zylindrischen Abschnitt (33a) und auf Anlage an ein Endlager (28a) angeordnet ist.

5. Einrichtung (1) nach Anspruch 3, wobei die Verschiebevorrichtung (19) des Infusionskorbes (17) ein flexibles Übertragungselement (20) umfasst, das durch eine obere Öffnung (6) des Körpers (2) verläuft, wobei das flexible Übertragungselement (20) ein erstes Ende (20d), das mit dem Infusionskorb (17) verbunden ist, und ein zweites Ende (20e) umfasst, das durch das motorisierte System (21) angetrieben ist, wobei die Verschiebevorrichtung (19) weiter eine Rückstellfeder (46) des Infusionskorbes (17) in unterer Infusionsposition umfasst, um das flexible Übertragungselement (20) unter Spannung zu setzen und somit das Innengewinde der Mutter (29) zum Außengewinde (34) der Schnecke (26) zu drücken, wenn die Mutter (29) in der zweiten Endposition ist.

6. Einrichtung (1) nach Anspruch 5, wobei das flexible Übertragungselement (20) in der Art eines Bandes ist, das aus einem Kunststoffmaterial realisiert ist, und einen abgeflachten rechteckigen Querschnitt aufweist.

7. Einrichtung (1) nach Anspruch 5 oder 6, wobei das erste Ende (20d) des flexiblen Übertragungselements (20) an einem Schlitten (37) befestigt ist, der mit mindestens einer Führungssäule (36) zusammenwirkt, wobei der Infusionskorb (17) abnehmbar an dem Schlitten (37) angeordnet ist.

8. Einrichtung (1) nach einem der Ansprüche 1 bis 7, wobei der Infusionskorb (17) Innenmagneten umfasst, die mit den von der Mutter (29) angetriebenen Außenmagneten zusammenwirken, um den Infusionskorb (17) entlang einer umfänglichen Wand (4) des Körpers (2) von der unteren Infusionsposition in die obere Abtropfposition und umgekehrt verschieben zu lassen.

9. Einrichtung (1) nach einem der Ansprüche 1 bis 8, wobei der Körper (2) eine umfängliche Wand (4) umfasst, die mit einem Griff (16) versehen ist, und das motorisierte System (21) in dem Griff (16) angeordnet ist.

10. Einrichtung (1) nach einem der Ansprüche 1 bis 9, wobei das motorisierte System (21) zum Antreiben des Infusionskorbes (17) eine Zeit T1 benötigt, um die Mutter (29) von der ersten Endposition in die zweite Endposition und umgekehrt übergehen zu lassen, wobei die Einrichtung einen Steuerungsschaltkreis (11) umfasst, der den Motor (25) eine Zeit T2 lang, länger als die Zeit T1, versorgt, um den Infusionskorb (17) von der unteren Infusionsposition in die obere Abtropfposition und umgekehrt übergehen zu lassen.

11. Einrichtung (1) nach Anspruch 10, wobei der Steuerungsschaltkreis (11) den Motor (25) eine Zeit T3 lang, kürzer als die Zeit T1, versorgt, und dann den Motor (25) in der umgekehrten Richtung eine Zeit T4 lang, länger als die Zeit T3, versorgt, wenn der Infusionskorb (17) in der unteren Infusionsposition ist, um den Infusionskorb (17) während des Infusionszyklus zu schütteln.

12. Einrichtung (1) nach einem der Ansprüche 1 bis 11, welche Mittel zum Erhitzen (8, 10) des in dem Körper (2) enthaltenen Wassers umfasst.

## Claims

1. Apparatus (1) for preparing infused beverages comprising a body (2) intended to receive water, an infusion basket (17) and a device for moving (19) the infusion basket in the body between a low infusion position wherein said infusion basket is immersed in water and a high drainage position wherein it is arranged above the water level, the moving device (19) comprising a motorised system (21) which comprises a screw (26) rotated by a motor (25) and a nut (29) mounted on the screw and connected to the infusion basket (17), said nut (29) being movable along the screw between a first extreme position wherein the infusion basket (17) is in the low infusion position and a second extreme position wherein the infusion basket (17) is in the high drainage position, **characterised in that** the motorised system (21) comprises a clutch device of the threading of the nut (29) with respect to the thread (34) of the screw (26) when the nut (29) reaches the first extreme position or the second extreme position.

2. Apparatus (1) according to claim 1, wherein the screw (26) comprises at least one cylindrical portion (33a, 33b) of diameter less than the diameter of the threading of the nut (29), the cylindrical portion (33a, 33b) forming part of the clutch device.

3. Apparatus (1) according to claim 2, wherein the motorised system (21) comprises at least one spring (35) intended to repel the threading of the nut (29) to the thread (34) of the screw (26) when the nut (29) is in the first extreme position or in the second extreme position.

4. Apparatus (1) according to claim 3, wherein the screw (26) is guided in rotation by two end bearings (28a, 28b), the at least one spring (35) being arranged around the at least one cylindrical portion (33a) and born on an end bearing (28a).

5. Apparatus (1) according to claim 3, wherein the device for moving (19) the infusion basket (17) comprises a flexible transmission element (20) which passes through an upper opening (6) of the body (2), said flexible transmission element (20) comprising a first end (20d) connected to the infusion basket (17) and a second end (20e) driven by the motorised system (21), said moving device (19) further comprising a spring (46) for repelling the infusion basket (17) into the low infusion position to tension the flexible transmission element (20) and to thus repel the threading of the nut (29) to the thread (34) of the screw (26) when the nut (29) is in the second extreme position.

6. Apparatus (1) according to claim 5, wherein the flexible transmission element (20) is of the ribbon type made of a plastic material and has a flattened rectangular cross-section.

7. Apparatus (1) according to claim 5 or 6, wherein the first end (20d) of the flexible transmission element (20) is attached to a carriage (37) which engages with at least one guiding column (36), the infusion basket (17) being arranged such that it can be dismounted on the carriage (37).

8. Apparatus (1) according to any one of claims 1 to 7, wherein the infusion basket (17) comprises internal magnets which engage with external magnets driven by the nut (29) to make the infusion basket (17) move from the low infusion position to the high drainage position and reciprocally, along a peripheral wall (4) of the body (2).

9. Apparatus (1) according to any one of claims 1 to 8, wherein the body (2) comprises a peripheral wall (4) provided with a handle (16) and the motorised system (21) is arranged in said handle (16).

10. Apparatus (1) according to any one of claims 1 to 9, wherein the motorised system (21) for driving the infusion basket (17) implements a time T1 to make the nut (29) pass from the first extreme position to the second extreme position and reciprocally, said apparatus comprising a control circuit (11) which powers the motor (25) for a time T2 greater than the time T1 to make the infusion basket (17) pass from the low infusion position to the high drainage position and reciprocally.

11. Apparatus (1) according to claim 10, wherein the control circuit (11) powers the motor (25) for a time T3 less than the time T1 when powers the motor (25) in the reverse direction for a time T4 greater than the time T3, when the infusion basket (17) is in the low infusion position, to stir the infusion basket (17) for the infusion cycle.

12. Apparatus (1) according to anyone of claims 1 to 11, which comprises means for heating (8, 10) the water contained in the body (2).
